# EUROPEAN PATENT APPLICATION

(11) **EP 2 387 134 A2**
(43) Date of publication of application: **16.11.2011**
(21) Application number: 11165636.9
(22) Date of filing: 11.05.2011
(51) Int. Cl.: H02K 9/22, H02K 55/02

(54) **Superconducting motor**

(30) Priority: 14.05.2010 JP 2010112094
(71) Applicant: Toyota Jidosha Kabushiki Kaisha, Toyota-shi, Aichi-ken, 471-8571 (JP); AISIN SEIKI KABUSHIKI KAISHA, Kariya-shi, Aichi-ken 448-8650 (JP)
(72) Inventor: MIZUTANI, Ryoji, TOYOTA-SHI, AICHI-KEN 471-8571 (JP); OHASHI, Yoshimasa, KARIYA-SHI, AICHI-KEN 448-8650 (JP); OKUMURA, Nobuo, KARIYA-SHI, AICHI-KEN 448-8650 (JP); ISHIDA, Kenji, KARIYA-SHI, AICHI-KEN 448-8650 (JP)
(74) Representative: Intès, Didier Gérard André

(57) **Abstract**

A superconducting motor (10) is provided with: a rotor (12) that is rotatably supported; a stator (14) that is provided around the rotor (12) and that is provided with a plurality of coils (34) that are respectively formed of superconducting wires (74) and that are wound at an inner periphery of a stator core (30); and a refrigerator (16) having a cooling portion (58) for cooling the plurality of coils (34). The cooling portion (58) of the refrigerator (16) is in contact with one end portions (74U, 74V, 74W) of respective phase coils (34, 34V, 34W).

## Description

### BACKGROUND OF THE INVENTION

### 1. Field of the Intention

The invention to a superconducting motor, and especially to a superconducting motor that is provided with a refrigerator for cooling coils that are formed of superconducting wires.

### 2. Description of the Related Art

Recently, much attention has been paid to electric motor vehicles (will hereinafter be referred to as "EVs") that run on the drive force produced by an in-vehicle, motor powered by an in-vehicle secondary battery, thus emitting no carbon dioxides, that is, achieving "zero emissions". Further, hybrid electric motor vehicles (will hereinafter be referred to as "HEVs") that run using, as drive force sources for propelling the vehicle, both an engine and a motor(s) have become popular.

Motors for use in EVs and HEVs, such as those described above, are required to be small in size and high in output since they are mounted in limited spaces. In order to maintain a desired output performance of a motor, it is essential to suppress an increase in the temperature of the motor, and more specifically, to cool the stator coils of the motor.

As a technology related to the requirement described above, Japanese Patent Application Publication No. 2000-125512 (JP-A-2000-125512) describes a coil-end contact cooling type rotational electric device. In this rotational electric device, at least a coil end of each stator coil has axially-protruding portions that are elongated platy conductors arranged radially and each protruding from an end face of the stator core in such a position that the thickness direction of the elongated slaty conductor coincides with a radial direction of the stator core. Also a cooling member having a high thermal conductivity and a flat cooling face is provided such that the cooing or the cooling member is in direct contact with, via electric insulation, the flat main faces of the respective elongated platy conductors of the coil end, which are located at the radially outmost side or radially innermost side of the coil end, thus improving the cooling of the coil end portion.

Meanwhile, a superconducting motor can be used as a motor to be provided, in EVs and HEVs, such as those described above. A superconducting motor has a plurality of coils that are formed of superconducting wires, and the electric resistances at the respective coils are substantially zero when currents, specifically, direct currents are supplied to the coils while the coils are cooled such that their temperatures are maintained at a predetermined ultralow temperature (e.g., 70 K). For this reason, the use of a superconducting motor is effective in reducing the power consumption of the motor, and thus reducing the power consumption of an EV, an HEV, or the like.

However, in a case where the stator coils of a superconducting motor are cooled using a refrigerator, if the coils that are formed of superconducting wires are cooled to a target ultralow temperature via other member(s) having a large heat capacity, such as a stator core, it takes much time to cool all the coils to the target ultralow temperature. In addition, in a structure in which, for cooling, the cooling portion of a refrigerator is in contact with only a portion of the outer peripheral face of the stator core, it is difficult to evenly cool the portions of the stator core that are radially opposed to the cooled portion of the stator core and the coils that are provided at the same portions of the stator core, and thus large circumferential and axial temperature gradients may occur depending upon the thermal conductivities of the respective portions.

### SUMMARY OF THE INVENTION

The invention provides a superconducting motor that is capable of cooling a plurality of phase coils, each formed of a superconducting wire, down to a desired ultralow efficiently and promptly.

An aspect of the invention relates to a superconducting motor having: a rotor that is rotatably supported; a stator that is provided the rotor, and that is provided with a plurality of coils that are respectively formed of superconducting wires and that are wound at an inner of a stator and a refrigerator having a cooling portion for cooling the plurality of coils. The cooling portion of the refrigerator is in contact with the plurality of coils.

In the above aspect, every predetermined number of coils out of the plurality of coils may be connected in series to form a plurality of phase coils. The plurality of phase coils may be in contact with the cooling portion of the refrigerator at a neutral point at which one end portions of the respective phase coils are electrically connected to each other.

In the above aspect, at the neutral point, the end portions of the respective phase coils may be electrically connected to each other via the cooling portion that is made of an electrically conductive member, rather than being directly connected to each other.

In the above aspect, the neutral point may be provided at the side of coil end portions of the plurality of coils, which are axial end portions of the plurality of coils in an axial direction of the superconducting motor. The refrigerator may be arranged such that the one end portions of the respective phase coils are connected to the cooling portion of the refrigerator at the side of the coil end portions of the plurality of coils.

In the above aspect, the lengths of the superconducting wires forming the respective coils may be equal to each other.

In the above aspect, the plurality of coils may be provided with an annular heat transfer member that is in contact with coil end portions of the plurality of coils, each of the coil end portions being located at a superconducting motor axial direction end of a corresponding one of the coils. The cooling portion of the refrigerator may be arranged so as to be in contact with the plurality of coils, and cools the plurality of coils from the coil end portions via the heat transfer member.

In the above aspect, the superconducting motor may be a three-phase alternating current motor.

In the aspect, the refrigerator may have a cylinder and a piston. The refrigerator may be structured such that coolant in an expansion chamber defined in the cooling portion is repeatedly compressed and expanded by the piston reciprocating in the cylinder, while heat of the coolant is absorbed and radiated via a heat absorption member, causing a temperature decrease and thereby achieving a desired cooling temperature at the cooling portion.

In the above the refrigerator may have a coolant compressor coupled with the cooling portion. The coolant compressor may be electrically insulated from a front end of the cooling portion, which is in contact with the plurality of coils, by an insulator that is provided at an intermediate portion of the cooling portion or at a boundary between the cooling portion and the coolant compressor.

According to the above aspect, because the cooling portion of the refrigerator is in contact with the phase coils and therefore the phase coils, each formed of the superconducting wire, are directly cooled, not via the stator core, or the like, it is possible to cool the phase coils down to a desired ultralow temperature efficiently, and promptly.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a sectional view that is taken along the axial direction of a superconducting motor of a first embodiment of the invention and that also shows part of side faces of the superconducting motor;
FIG. 2 is a sectional view taking along the line I - I in FIG. 1;
FIG. 3 is a view schematically showing an electric connection in which a U-phase coil, a V-phase coil, and a W-phase coil are electrically connected to each other at a neutral point;
FIG. 4A is a view illustrating examples of one end portions of the respective phase coils, which constitute the neutral point;
FIG. 4B is a view illustrating a state where the neutral point shown in FIG. 4A is connected to a cooling portion of a refrigerator;
FIG. 5A is a view showing a structure in which the one end of the respective phase coils are connected, at the neutral point, to the cooling portion of the refrigerator in a manner different from that shown in FIG. 4B;
FIG. 5B is a view showing the structure in FIG. 5A as from the direction indicated by the arrow B in FIG. 5A;
FIG. 6 is a view showing a structure in which the one end portions of the respective phase coils are connected, at the neutral point, to the cooling portion of the refrigerator in a manner different from that shown in FIG. 4B, FIG. 5A, and FIG. 5B;
FIG. 7 is an enlarged side view of the cooling portion of the refrigerator;
FIG. 8A is a sectional view illustrating an example where an annular insulator is provided at an intermediate portion of the cooling portion of the refrigerator;
FIG. 8B is a sectional view illustrating an example where an annular insulator having a relatively high insulation resistance is provided at the intermediate portion of the cooling portion of the refrigerator;
FIG. 9 is a sectional view illustrating an example where an annular insulator is provided at the boundary between the cooling portion and the coolant compressor of the refrigerator;
FIG. 10 is a sectional view that is taken along the axial direction of a superconducting motor of a second embodiment of the invention including a plurality of refrigerators and also shows part of side faces of the superconducting motor;
FIG. 11 is a view schematically illustrating a state where the U-phase coil, the V-phase coil, and the W-phase coil are electrically connected to each other at two neutral points;
FIG. 12 is a sectional view that is taken along the axial direction of a superconducting motor of a third embodiment of the invention and also shows side faces of some portions of the superconducting motor; and
FIG. 13 is a sectional view that is taken along the axial direction of a superconducting motor of a fourth embodiment of the invention and also shows side faces of some portions of the superconducting motor.

### DETAILED OF EXAMPLE EMBODIMENTS

Hereinafter, example of the invention will be described in detail with reference to the accompanying drawings. Note that the shapes, materials, values, directions, and so on, specified in the following descriptions of the respective example embodiments are no more than examples for facilitating understanding on the invention, and thus they may be changed as needed in accordance with various factors, such as the use of the product, the purpose of using the product, and the specification of the product.

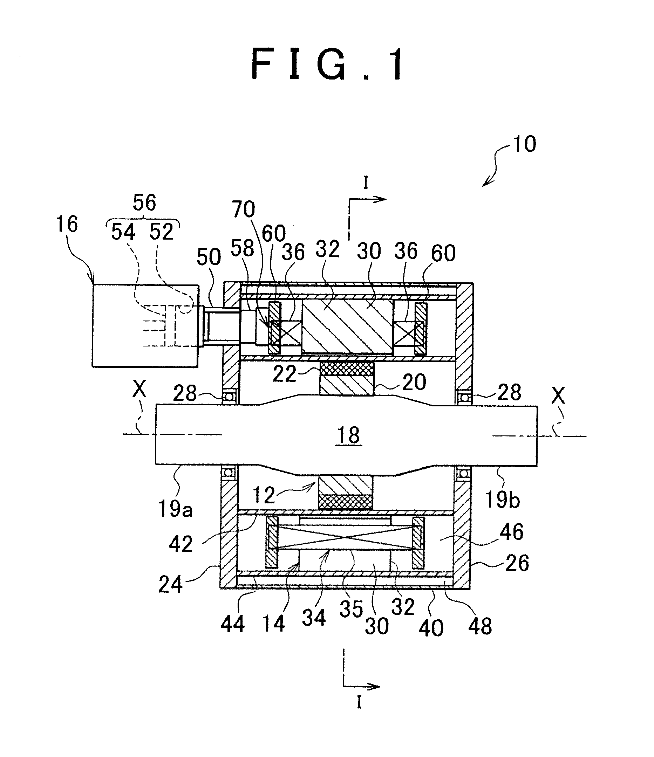

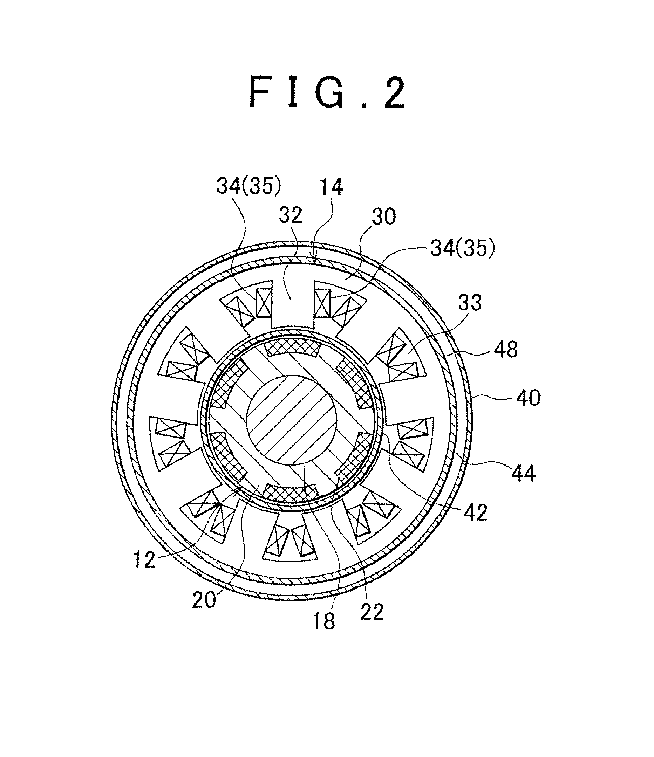

FIG. 1 is a sectional view of a superconducting motor 10 showing a first embodiment of the invention, which is taken along the axial direction of the superconducting motor 10, and which also shows part of the side faces of the superconducting motor 10. FIG. 2 is a sectional view of the superconducting motor 10 that is taken along the line I - I shown in FIG. 1 (note that the hatching of the stator core is omitted in this view). The superconducting motor 10 has a rotor 12 that is rotatably supported, a stator 14 that is generally cylindrical and is arranged so as to surround the outer periphery of the rotor 12, and a refrigerator 16 that is fixed on an axial end face of the superconducting motor 10. Note that, in the following descriptions on the respective example embodiments, each direction that extends along a rotational axis X of a rotor shaft 18 that passes through the center of the rotor 12 will be referred to as "axial direction (motor-axis direction)", each radial direction intersecting the rotational axis X at right angle will be referred to as "radial direction", and each direction that extends along a circle that is formed on a plane, which includes the radial directions stated above, using the rotational axis X as its center point will be refereed to as "circumferential direction".

The rotor 12 has a rotor core 20 that is cylindrical and is formed by, for example, stacking magnetic steel plates and then joining them together by caulking, welding, or the like, and a rotor shaft 18 that is, for example, a round-bar steel member extending through the center hole of the rotor core 20 and fixed to the rotor core 20. A plurality of permanent magnets 22 are (in this first embodiment, the number of the permanent magnets 22 is six, or the permanent magnets 22 are provided at six positions) equiangularly provided on the outer peripheral face of the rotor core 20 such that they are exposed to the outer peripheral face. It is to be noted that the permanent magnets 22 may be provided at the rotor core 20 such that they are unexposed to the outer peripheral face, that is, for example, they may be embedded in inner portions of the rotor core 20, which are near the outer peripheral face thereof.

The rotor shaft 18 of the rotor 12 is rotatably supported, at both end portions 19a and 19b thereof, by bearings 28 that are fixed respectively to disk-shaped endplates 24 and 26 forming both axial end faces of the superconducting motor 10. With this arrangement, as rotating magnetic fields are produced in the stator 14, they attract the permanent magnets 22 of the rotor core 20. Thus, the rotor 12 is driven so as to rotate.

The stator 14 has a stator core 30 that is a generally cylindrical stator core. A plurality of tooth portions 32 (note that nine tooth portions 32 are provided in the first embodiment) protruding radially inward are equiangularly provided at the inner periphery of the stator core 30. The spaces that are formed between the respective tooth portions 32 and that extend in the axial direction serve as slots 33. The stator core 30 is formed by, for example, stacking a plurality of generally ring-shaped magnetic steel plates axially and then joining them together by caulking, bonding, welding, or the like. It is to be noted that the stator core 30 may be formed by arranging nine individual stator cores, each having a single tooth portion, into the form of a ring and then fastening them, from the outer side, using a tubular fastening member(s). These individual stator cores may be dust cores.

Coils 34 are provided on the respective tooth portions 32 of the stator core 30. The coils 34 are formed by winding superconducting wires around the respective tooth portions 32. The superconducting wire may be a tape-shaped superconducting wire that is rectangular in cross section. The superconducting material of the superconducting wire is, for example, an yttrium-based superconducting material or a bismuth-based superconducting material. However, it is to be noted that the superconducting material of the superconducting is not limited to any of them, that is, it may alternatively be any other known superconducting material or any superconducting material that will be developed in future and exhibit its superconductivity at a higher temperature.

Each coil 34 has an inner portion 35 each located within the slot 33 between the tooth portions 32 that are adjacent to each other, and two coil end portions 36 protruding outwardly from the respective axial end faces of the stator core 30. For example, a three-phase synchronous AC (alternating current) motor may be used as the superconducting motor 10. In such a case, each coil 34 is connected, in series, to another coil 34 that is located away, in the circumferential direction, from the former coil 34 across two other coils 34, whereby a U-phase coil 34U, a V-phase coil 34V, and a W-phase coil 34W are formed.

It is to be noted that the superconducting motors of the invention are not limited to three-phase AC motors, that is, they may be a two-phase AC motor, an AC motor having four or more different phase coils, a single-phase AC motor, a DC (direct current) motor, or the like.

Referring to FIG_{.} 3, one end portion of the U-phase coil 34U, one end portion of the V-phase coil 34V, and one end portion of the W-phase coil 34W are electrically connected to each other at a neutral point 70, while the other end portion of the U-phase coil 34U, the other end portion of the V-phase coil 34V, and the other end portion of the W-phase coil 34W are connected to a U-phase current input terminal 72U, a V-phase current input terminal 72V, and a W-phase current input terminal 72W, respectively. The structure at the neutral point 70 and the structure of the superconducting wire forming each coil 34 will be described later.

Referring again to FIGs. 1 and 2, the superconducting motor 10 has a cylindrical motor case 40, and the rotor 12 and the stator 14 are disposed within the motor case 40. The both axial ends of the motor case 40 are airtightly coupled with the outer peripheral portions of the endplates 24 and 26, respectively. The motor case 40 and the endplates 24 and 26 are each made of, for example, a non-magnetic material, such as stainless steel. It is to be noted that the motor case 40 may be formed integrally with the endplate 24 or the endplate 26.

In the motor case 40, an inner cylindrical member 42 and an cylindrical member 44 are disposed concentrically with the rotor 12. The both axial ends of the inner cylindrical member 42 are airtightly fixed on the inner faces of the endplates 24 and 26, respectively, and the both axial ends of the outer cylindrical member 44 are airtightly fixed on the inner faces of the endplates 24 and 26, respectively. The inner cylindrical member 42 may be made of a nonmetallic material that does not impede passage of magnetic fields and is not electrically conductive. On the other hand, the outer cylindrical member 44 may be made of a material having a low thermal conductivity (e.g., FRP) or a nonmagnetic material having a low thermal conductivity.

The inner diameter of the inner cylindrical member 42 is slightly lager than the diameter of the rotor core 20 of the rotor 12, and a gap, which is uniform in the circumferential direction, is formed between the outer peripheral face of the rotor core 20 and the inner peripheral face of the inner cylindrical member 42. Further, a first vacuum chamber 46, which is a cylindrical space, is formed between the inner cylindrical member 42 and the outer cylindrical member 44. The stator 14 that includes the coils 34 is disposed in the first vacuum chamber 46. The outer peripheral face of the stator core 30 of the stator 14 is closely fixed on the inner peripheral face of the outer cylindrical member 44.

The vacuum in the first vacuum chamber 46 is made by evacuating the first vacuum chamber 46 through an air vent hole (not shown in the drawings) that is formed in at least one of the endplates 24 and 26, after assembling the superconducting motor 10 including the refrigerator 16. Thus, defining the first vacuum chamber 46 by the inner cylindrical member 42 and the outer cylindrical member 44, each having a low thermal conductivity, and then evacuating the first vacuum chamber 46 as described above provides better heat insulation for the stator 14 including the coils 34 and disposed in the first vacuum chamber 46.

Further, a second vacuum chamber 48, which is a cylindrical space, is formed between the outer cylindrical member 44 and the motor case 40. Like the first vacuum chamber 46, the second vacuum chamber 48 is in a vacuum state. In this structure, the second vacuum chamber 48 separates the stator 14, including the coils 34 and disposed in the first vacuum chamber 46, from the outer side of the superconducting motor 10. As a result, the heat insulation for the stator 14 including the coils 34 is further enhanced.

The refrigerator 16 is disposed at the endplate 24 that is located at the side of one end of the superconducting motor 10 in the axial direction. The refrigerator 16 is attached via a tubular bracket 50 that is airtightly fixed to the periphery of a through hole of the endplate 24.

The refrigerator 16 is provided with a coolant compressor 56 which has a cylinder 52 and a piston 54 and in which coolant (e.g., He gas) is repeatedly compressed and expanded as the piston 54 linearly reciprocates within the cylinder 52. Further, the refrigerator 16 has a cooling portion 58 extending from the inside of the tubular bracket 50 to the first vacuum chamber 46 via the through hole of the endplate 24 and having an external shape like a stepped round column. The front face, which is a flat face, of the cooling portion 58 is in contact with the coil end portions 36 via a heat transfer member 60. For electric insulation between the coils 34 and the refrigerator 16, an insulator(s), such as an insulating paper, may be provided between the coil end portions 36 and the heat transfer member 60 and/or between the heat transfer member 60 and the cooling portion 58.

The cooling performance of the refrigerator 16 is high enough to cool the coils 34 down to a desired ultralow temperature (e.g., approximately 70 K) at which the coils 34, each formed of the superconducting wire, exhibit their superconductivities, and the cooling temperature can be adjusted by controlling the travel of the piston 54. In a case where the superconducting motor 10 is provided in an electrically-driven vehicle, such as an electric motor vehicle, and is used as a drive force source for propelling the vehicle, a refrigerator that is small and lightweight may be used as the refrigerator 16 so that it can be disposed in a limited mounting space and the weight of the vehicle can be reduced. For example, a Stirling refrigerator that is a cooling storage type refrigerator may be used as the refrigerator 16.

In the following, the structure of the Stirling refrigerator employed in the first embodiment will be briefly described. The Stirling, refrigerator has the cylinder 52 and the piston 54 that is driven by a linear motor to reciprocate linearly within the cylinder 52. Further, another piston (not shown in the drawings), which is a free piston mechanically unconnected to the piston 54, is provided within the cylinder 52. A compression chamber filled with coolant is defined between the free piston and the piston 54 while an expansion chamber filled with coolant is defined between the free piston and an end face of the cylinder 52. A heat absorption member, which serves as heat-transferring means, is provided between the expansion chamber and the compression chamber. As the piston 54 is driven, the free piston reciprocates with a predetermined phase difference, thus repeatedly compressing and expanding the coolant in the compression chamber, while the heat absorption member absorbs the heat of the coolant and radiates it to the outside, whereby the front end of the cooling portion 58 (also called "cooling storage portion") in which the expansion chamber is formed is cooled.

In a case where the restrictions on the mounting space and the weight are not strict, for example, when the superconducting motor 10 is used as a drive force source for a large moving object, such as trains and vessels, or as a drive force source for a positionally-fixed machine, a refrigerator that is large in size and weight may be used as long as the refrigerator has a cooling performance as described above.

The heat transfer member 60 that is in contact with the axial front end face of the cooling portion 58 of the refrigerator 16 is formed of, for example, a metal plate having a high thermal conductivity, has an annular shape extending continuously in the circumferential direction, and is in contact with all the coil end portions 36 that are located at one axial side. On the other hand, another heat transfer member 60 that is similar to the former heat transfer member 60 is provided at the coil end portions 36 located at the other axial side. Thus, the annular heat transfer members 60 are provided, respectively, at the coil end portions 36 located at the respective axial sides such that the heat transfer members 60 are in contact with the coil end portions 36, and therefore the coils 34 circumferentially arranged can be promptly, and evenly, cooled from the coil end portions 36.

A recess or groove is formed at the face of each heat transfer member 60 that is opposed to the coils 34, and the coil end portion, 36 is fitted to it. This increases the contact area between each coil end portion 36 and the heat transfer member 60, and thus increases the efficiency in cooling the coils 34.

Further, each heat transfer member 60 may be made of an insulating resin material and formed integrally with the coil end portions 36. With this structure, the electric insulation between the coils 34 and the cooling portion 58 of the refrigerator 16 can be further enhanced. In this case, further, in order to increase the thermal conductivity of each heat transfer member 60, metal particles or metal powder may be dispersedly added to the insulating resin material.

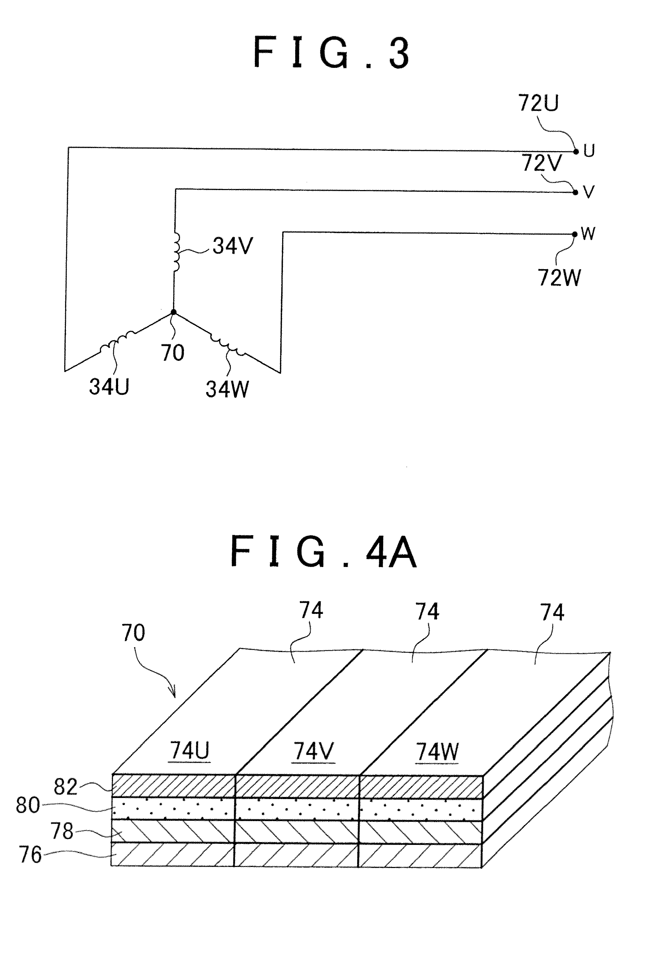

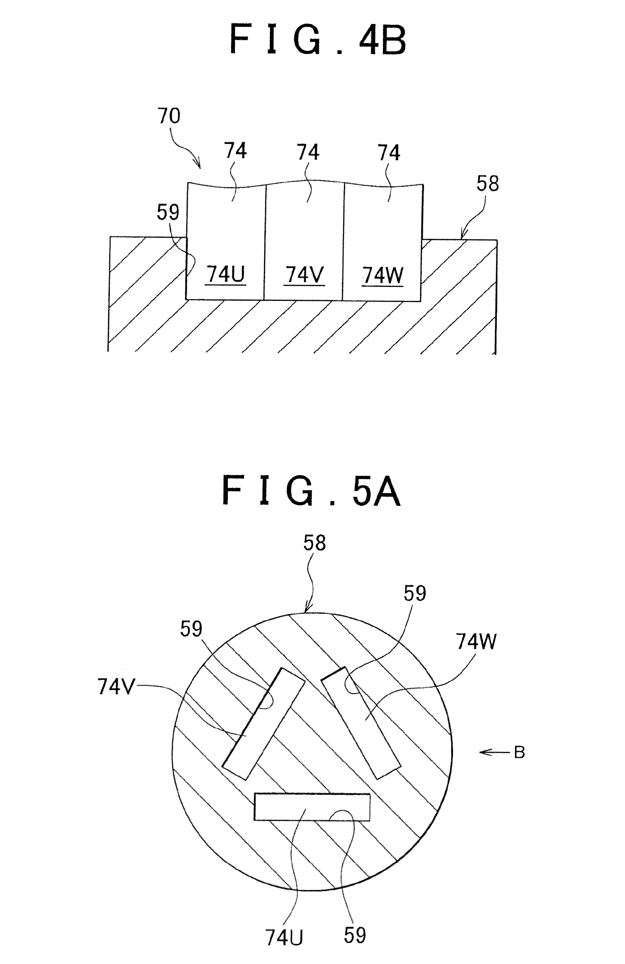

Next, the structure at the neutral point 70 and the structure of the superconducting wire 74 that forms each coil 34 will be described with reference to FIGS. 4A and 4B. FIG. 4A illustrates examples of a one end portion 74U of the U-phase coil 34U, and a one end portion 74V of the V-phase coil 34V, and a one end portion 74W of the W-phase coil 34W, which constitute the neutral point 70, and FIG. 4B illustrates a state where the neutral point 70 shown in FIG. 4A is connected to the cooling portion 58 of the refrigerator 16.

Each coil 34 in the first embodiment is formed by winding the superconducting wire 74 that is a tape-like or band-like wire having a rectangular cross section. The superconducting wire 74 is formed by stacking a base material 76, an intermediate layer 78, a superconducting layer 80, and a coating layer 82 in this order.

For example, the superconducting wire 74 is manufactured as follows. Note that Hastelloy tape base material may be used as the base material 76, for example. The intermediate layer 78, the superconducting layer 80, and the coating layer 82 are successively stacked and bonded while the base material 76 is conveyed in its longitudinal direction at a constant speed. More specifically, the intermediate layer 78 is formed on the surface of the base material 76 by depositing an oxide (e.g., Gd₂Zr₂O₇) on the surface of the base maternal 76 by, for example, ion-beam assisted deposition. Then, the superconducting layer 80 is formed on the surface of the intermediate layer 78 by depositing a superconducting material (e,g., a yttrium oxide or a bismuth oxide) on the surface of the intermediate layer 78 by, for example, pulse-laser deposition. Finally, the coating layer 82 is formed on the surface of the superconducting layer 80 by spattering, for example, silver or a silver alloy on the surface of the superconducting layer 80. The coating layer 82 serves as both a protection layer covering the superconducting layer 80 and a surface that contacts the heat transfer member 60 at the coil end portion 36.

It is to be noted that the materials and forming methods of the respective layers of the superconducting wire in the invention are not limited to those described above, that is, any known materials and multilayer forming methods or any materials and multilayer forming methods that will be developed in future may be used. Further, the cross-sectional shape of the superconducting wire is not limited to rectangular shapes, that is, for example, a round cross-section wire having a superconducting material core provided at the center of the wire and coated with an insulating coating (e.g., resin coating) that is formed around the core, such as typical electric wires, may be used.

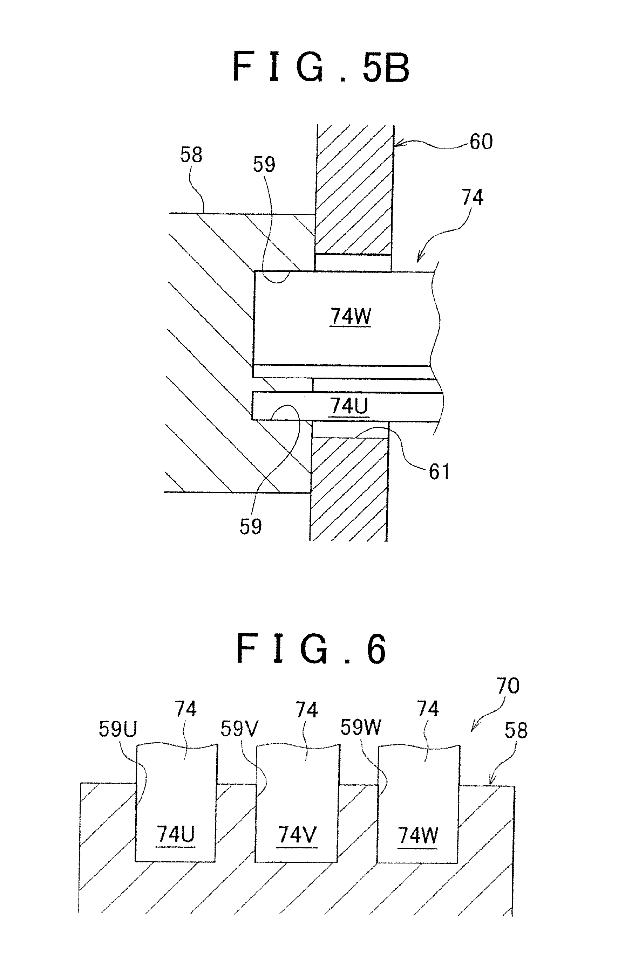

Referring to FIG. 4A, the neutral point 70 is constituted of the one end portions 74U, 74V, and 74W of the phase coils 34U, 34V, and 34W that are pulled, respectively, out from the corresponding coils 34 to the side of the coil end portions 36, which are one axial end portions of the respective coils 34, such that the rectangular end faces of the one end portions 74U, 74V, and 74W are aligned side by side, that is, such that the one end portions 74U and 74V are in contact with each other and the one end portions 74V and 74W are in contact with each other. The one end portions 74U, 74V, and 74W, constituting the neutral point 70, pass through an opening 61 (refer to FIG. 5B) formed in the heat transfer member 60 and are press-fitted, as shown in FIG. 4B, into a fitting hole 59 that is formed at the end portion of the cooling portion 58 of the refrigerator 16 and is rectangular in section. Note that it is possible to more reliably prevent the superconducting wires 74 from being removed from the cooling portion 58 by strengthening the connection therebetween by, for example, caulking the cooling portion 58 after inserting the one end portions 74U, 74V, and 74W into the fitting hole 59.

As described above, in the superconducting motor 10 of the first embodiment, the one end portions 74U, 74V, and 74W of the respective superconducting, wires 74 forming the phase coils 34U, 34V, and 34W are directly connected, at the neutral point 70, to the cooling portion 58 of the refrigerator 16, that is, the one end portions 74U, 74V, and 74W of the respective superconducting wires 74 are in contact with the cooling portion 58 of the refrigerator 16 at the neutral point 70. With this structure, the superconducting layers 80 of the superconducting wires 74 forming the coils 34 of the respective phase coils 34U, 34V, and 34W can be cooled directly, efficiently, and promptly via the coating layers 82 having a high thermal conductivity, while the temperature (coolness) dispersion to other parts of the superconducting motor 10, such as the stator core 30, the cryostats, the bearings, and the rotor, each having a large thermal capacity, is suppressed. Thus, the time required to start up the superconducting motor 10 is relatively short, and the electric power consumption of the refrigerator 16 is relatively small.

In the superconducting motor 10 of the first embodiment, further, the lengths of the superconducting wires 74 forming the respective phase coils 34U, 34V, and 34W are substantially equal to each other. Therefore, the phase coils 34U, 34V, and 34W can be evenly cooled by cooling them from the neutral point 70. Thus, the superconducting states of all the three phase coils can be easily determined by detecting and monitoring the temperature of only one of the three phase coils using a sensor.

In the superconducting motor 10 of the first embodiment, further, the annular heat transfer member 60 that is in contact with the cooling portion 58 of the refrigerator 16 is provided so as to contact the coil end portions 36 of the respective coils 34 that are arranged equiangularly. With this structure, the coils 34 can be cooled evenly, and promptly, from the coil end portions 36 located at the respective axial sides.

Next, another structure at the neutral point 70 will be described with reference to FIGS. 5A and 5B. FIG. 5A shows a structure in which the one end portions 74U, 74V, and 74W of the phase coils 34U, 34V, and 34W are connected, at the neutral point 70, to the cooling portion 58 of the refrigerators 16 in a manner different from that shown in FIG. 4B. FIG. 5B shows the structure in FIG. 5A as viewed in the direction indicated by the arrow B in FIG 5A.

Referring to FIG. 5A, the one end portions 74U, 74V, and 74W of the phase coils 34U, 34V, and 34W are pulled out to the cool end portion 36-side, which is the side of one axial end of each coil 34, such that the one end portions 74U, 74V, and 74W are not in contact with each other. Referring to FIG. 5B, the one end portions 74U, 74V, and 74W pass through the opening 61 of the heat transfer member 60 and are press-fitted, respectively, into three fitting holes 59U, 59V, and 59W formed at the end portion of the cooling portion 58 of the refrigerator 16. The fitting holes 59U, 59V, and 59W are formed, in the end face of the cooling portion 58, at positions substantially corresponding, respectively, to the three sides of an equilateral triangle. In order to more reliably prevent the superconducting wires 74 from being removed from the cooling portion 58, for example, the cooling portion 58 is caulked after the one end portions 74U, 74V, and 74W are inserted into the fitting holes 59U, 59V, and 59W, respectively, so that the connections therebetween are strengthened. It is to be noted that the form in which to arrange the one end portions 74U, 74V, and 74W of the phase coils 34U, 34V, and 34W, which are connected to the cooling portion 58 such that they are not in contact with each other, is limited neither to equilateral triangle forms nor to generally equilateral triangle forms as described above. That is, the one end portions 74U, 74V, and 74W may be arranged in various other forms, such as the one illustrated in FIG. 6 in which the one end portions 74U, 74V, and 74W are arranged side by side (or in line) at given intervals.

The one end portions 74U, 74V, and 74W of the phase coils 34U, 34V, and 34W are not electrically connected to each other directly, and constitute the neutral point 70 by being electrically connected to each other via the cooling portion 58 that is an electrically conductive member formed of, for example, copper. The potential at the neutral point of a three-phase AC motor, at which three phase coils are electrically connected to each other, is normally zero. Thus, even if the one end portions 74U, 74V, and 74W of the respective superconducting wires 74 are electrically connected to each other via the cooling portion 58, which is electrically conductive, as described above, no current flows to the cooling portion 58 and to the coolant compressor 56. However, it is to be noted that potential at the neutral point may change from zero due to a disturbance in motor currents, which may be caused by, for example, an abnormality in the control for opening and closing the switching elements of the inverter. Therefore an insulator or an insulating structure may be provided such that no current flows from the cooling portion 58 to the coolant compressor 56 even in such an abnormal state. An insulator that may be provided for this purpose will be described later.

Even if the one end portions 74U, 74V, and 74W of the phase coils 34U, 34V, and 34W are in contact with the cooling portion 58 of the refrigerator 16 such that they are not directly electrically connected to each other as previously described, the same effects as described above can be achieved in terms of cooling of the phase coils 34U, 34V, and 34W. Further, since the one end portions 74U, 74V, and 74W are separately press-fitted to the cooling portion 58 as described above, each one end portion is in contact with the cooling portion 58 at the longitudinal end face and four peripheral side faces thereof, which enables the phase coils 34U, 34V, and 34W to be cooled more evenly and efficiently.

The superconducting motor 10 described above incorporates both the structure in which the one end portions 74U, 74V, and 74W of the phase coils 34U, 34V, and 34W are connected to the cooling portion 58 of the refrigerator 16 at the neutral point 70 so that the coils 34 are cooled from the neutral point 70-side and the structure in which the coils 34 are cooled from the coil end 36 side via the annular heat transfer member 60 that is in contact with the cooling portion 58 of the refrigerator 16. However, it is to be noted that the superconducting motors of the invention are not limited to this. That is, for example, the superconducting motor 10 may be adapted to have either of the two structures to cool the coils 34. More specifically, in a case where the superconducting motor 10 is adapted to have only the structure in which the coils 34 are cooled from the neutral point 70-side, the heat transfer member 60 may be omitted, and on the other hand, in a case the superconducting motor 10 is adapted to have only the structure in which the coils 34 are cooled via the heat transfer member 60, the neutral point 70 at which the one end portions 74U, 74V, and 74W of the coils 34U. 34V, and 34W are electrically connected to each other may be provided at a position away from the cooling portion 58 of the refrigerator 16.

In the superconducting motor 10 described above, further, the phase coils 34U, 34V, and 34W are in contact with the cooling portion 58 of the refrigerator 16 at the neutral point 70 at which the phase coils 34U, 34V, and 34W are electrically connected to each other. However,it is to be noted the invention is not limited to this. That is, for example, the coils 34 may be connected to the cooling portion 58 of the refrigerator 16 at portions of the coil end portions 36 other than those at the neutral point 70 such that the phase coils 34U, 34V, and 34W are insulated from each other.

In the superconducting motor 10 described above, further, the one end portions 74U, 74V, and 74W of the phase coils 34U, 34V, and 34W are placed in contact with the cooling portion 58 of the refrigerator 16 by being fitted thereinto. However, it is to be noted that the invention is not limited to this. That is, for example, each of the one end portions 74U, 74V, and 74W may be directly connected to the cooling portion 58 of the refrigerator 16 at only one end face (e.g., the longitudinal end face) thereof, although the contact area, which contributes to heat transfer, is relatively small.

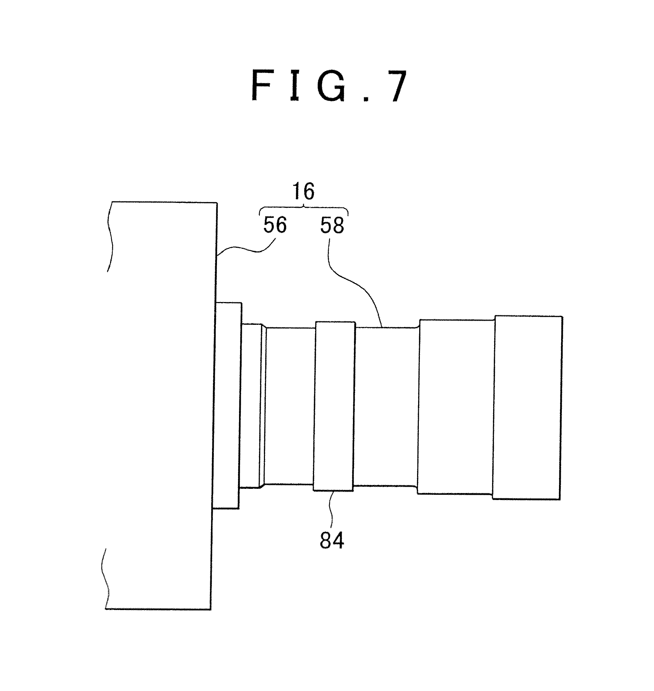

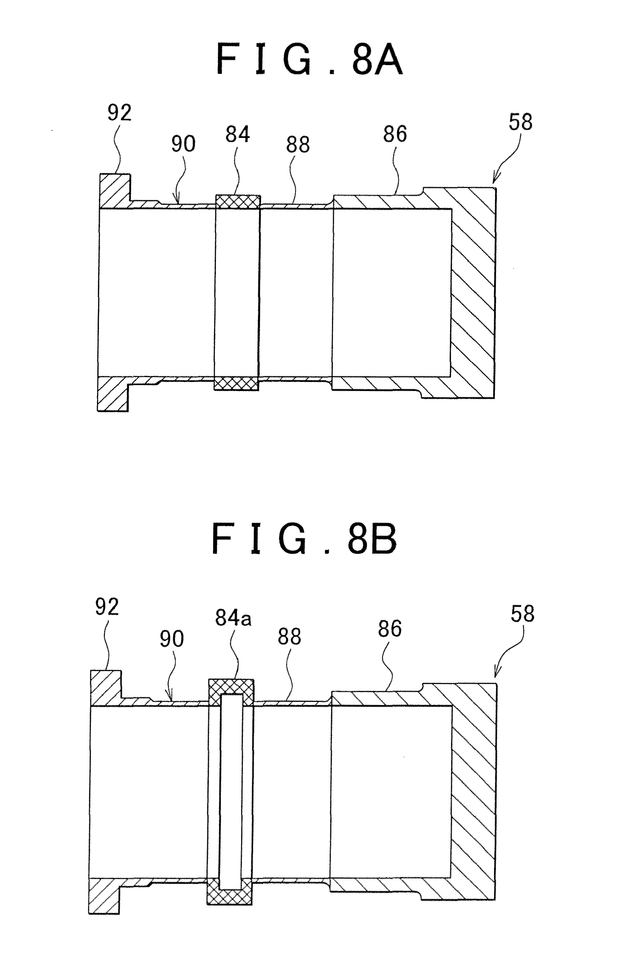

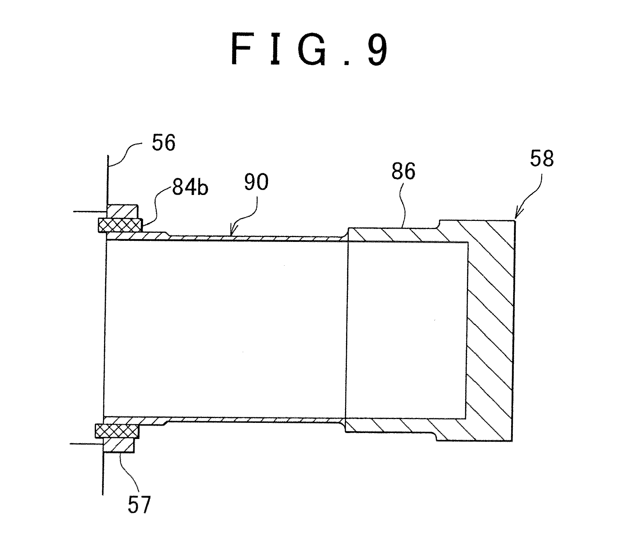

Next, the insulation structure of the refrigerator 16 will be described with reference to FIGS. 7 to 9. FIG. 7 shows an enlarged side view of the cooling portion 58 of the refrigerator 16. FIG. 8A is a sectional view illustrating an example where an annular insulator 84 is provided at an intermediate portion of the cooling portion 58. FIG. 8B is a sectional view illustrating an example where an annular insulator 84a having a relatively high insulation resistance is provided at an intermediate portion of the cooling portion 58. FIG. 9 is a sectional view illustrating an example where an annular insulator 84b is provided at the boundary between the coolant compressor 56 and the cooling portion 58.

Referring to FIG. 7, the refrigerator 16 is constituted of the coolant compressor 56 and the cooling portion 58, and the front end portion of the cooling portion 58 (i.e.,the end portion on the right side in FIG. 7) is in contact with the neutral point 70 of the phase coils 34U, 34V, and 34W. The cooling portion 58 is shaped like a stepped cylinder with its front end closed, and the insulator 84 that is annular or ring-shaped is provided at an intermediate portion of the cooling portion 58 in its axial direction (i.e., the left-right direction in FIG. 7).

Referring to FIG. 8A, the cooling portion 58 of the refrigerator 16 is constituted of a front end portion 86 that is made of, for example, copper, which has a high thermal conductivity and a high electric conductivity, a cylindrical intermediate member 88 that is made of, for example, stainless steel, the insulator 84 that is shaped like a short cylinder and is made of an insulating (e.g., ceramic), and a cylindrical base end portion 90 that is airtightly coupled with the coolant compressor 56 via a flange portion 92 and is made of, for example, stainless steel. The front end portion 86, the intermediate member 88, the insulator 84, and the base end portion 90 are airtightly bonded using a soldering metal, such as soldering gold, soldering silver, and soldering nickel. Further, it is desirable that the insulator 84 be made of a material having a low thermal conductivity, and for this reason, alumina is especially preferred among various ceramic materials.

In the cooling portion 58 structured as described above, the insulator 84 serves as an insulation structure between the front end portion 86 in contact with the coils 34 and the base end portion 90 connected to the coolant compressor 56. Therefore even when the potential at the neutral point 70 has changed from zero due to a disturbance in motor currents, which may be caused for some reasons, it is possible to prevent large currents from flowing from the cooling portion 58 to the coolant compressor 56, and thus protect the refrigerator 16 incorporating a linear motor, and so on.

Further, in the example illustrated in FIG 8B, the inner diameter of the insulator 84a is equal to the diameters of the intermediate member 88 and the base end portion 90, and the peripheral wall of the insulator 84a protrudes radially outward, so that the total wall length of the insulator 84a is relatively large. Thus, the use of the insulator 84a provides a higher insulation resistance and improves the insulation performance.

Further, in the example illustrated in FIG. 9, the insulator 84b that is shaped like a short cylinder is disposed between an attachment portion 57 of the coolant compressor 56, to which the base end portion 90 of the cooling portion 58 is connected, and the base end portion 90 of the cooling portion 58, not at an intermediate portion of the cooling portion 58, that is, an insulation structure is provided at the boundary between the cooling portion 58 and the coolant compressors 56. This structure reduces the number of portions to be bonded using the soldering metal and thus eases the production of the cooling portion 58.

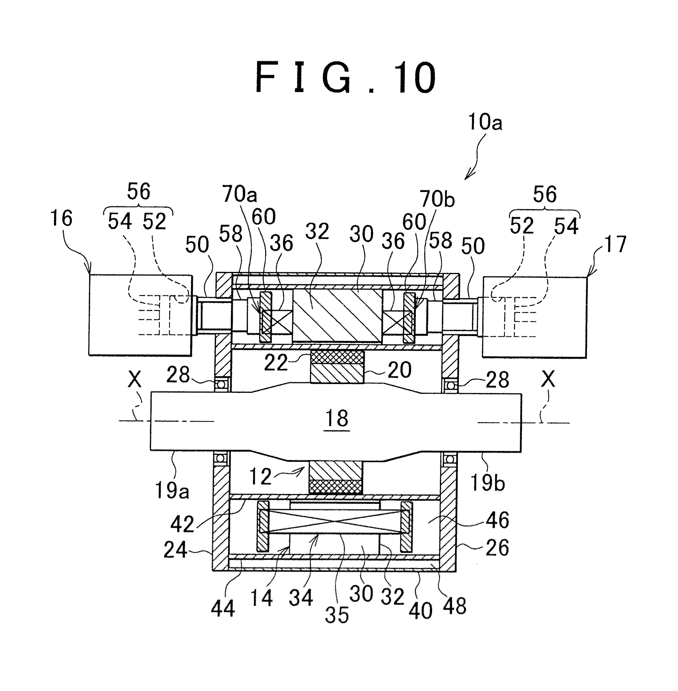

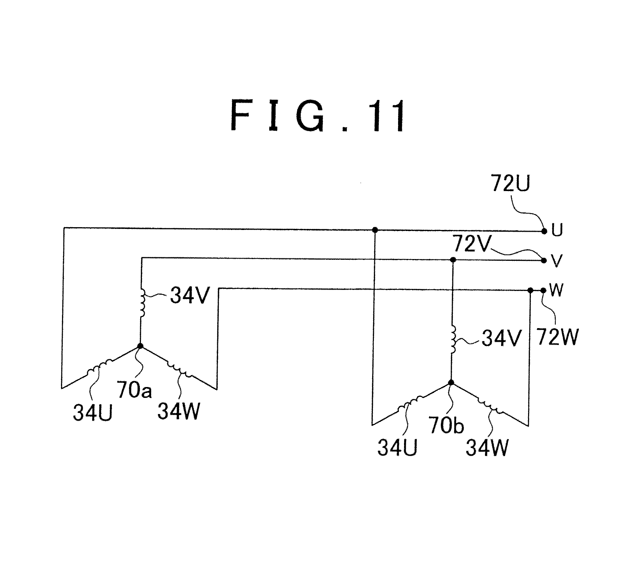

Next, a superconducting motor 10a of a second embodiment of the invention, will be described with reference to FIGs. 10 and 11. In the following, the structure of the superconducting motor 10a, which is different from that of the above-described superconducting motor 10 of the first embodiment and the effects achieved owing to the different structure will be mainly described. In the following descriptions, the structural elements of the superconducting motor 10a that are identical or similar to those of the superconducting motor 10 will be denoted by the same or similar reference numerals, and the descriptions on them will be omitted to avoid repetitions.

FIG. 10 shows a sectional view of the superconducting motor 10a of the second embodiment that is taken along the axial direction thereof and also shows the side faces of some portions of the superconducting motor 10a. FIG. 11 is a view schematically illustrating an electric connection in the superconducting motor 10a, shown in FIG. 10, in which the phase coils 34U, 34V, and 34W are connected to each other at two neutral points 70a and 70b.

The superconducting motor 10a of the second embodiment has a refrigerator 17 in addition to the refrigerator 16. In the following descriptions, the refrigerators 16 and 17 will be referred to as "the first refrigerator 16" and "the second refrigerator 17", respectively. The second refrigerator 17 is attached to the endplate 26 located at the other axial side via a structure that is the same as that for the refrigerator 16.

The first refrigerator 16 and the refrigerators 17 are arranged so as to face each other such that the piston 54 in the first refrigerator 16 and the piston 54 in the second refrigerator 17 move collinearly. That is, the first refrigerator 16 and the second refrigerator 17 are axially opposed to each other. In the refrigerator 16 and the second refrigerator 17, the respective coolant compressor 56 are driven such that the respective pistons 54 in opposite directions. specifically, the first refrigerators 16 and the second refrigerator 17 are such that the compression and expansion of the piston 54 in the first refrigerator 16 and of the piston 54 in the second refrigerator 17 are with each other. With arrangement and driving manner, the rotational moments that are exerted on the superconducting motor 10a by the first refrigerator 16 and the second refrigerator 17, respectively, the pistons 54 are moving can be offset, and thus vibrations and noises can be reduced.

Further, referring to FIG 11, the superconducting motor 10a has two neutral points, that is, the first neutral point 70a and the second neutral point 70b. More specifically, two groups of the phase coils 34U, 34V, and 34W are connected in parallel to each other, and the phase coils 34U, 34V, and 34W in one of the two groups are electrically connected to each other at the first neutral point 70a, while the phase coils 34U, 34V, and 34W in the other group are electrically connected to other at the second neutral point 70b. The first point 70a correspond to the neutral point 70 of the above-described superconducting motor 10 of the first embodiment, and the second neutral point 70b is provided at the coil end portions 36 located at the other axial side and is cooled by the cooling portion 58 of the refrigerator 17. Other structures of the superconducting motor 10a are the as those of the superconducting motor 10.

In the superconducting motor 10a of the second embodiment, as described above, the coils 34 of the coils 34U, 34V, and 34W can be efficiently, and promptly, cooled down to a desired ultralow temperature from the neutral points 70a and 70b provided at the respective axial sides, by the two refrigerators 16 and 17, is, not via parts and portions having a large thermal capacity, such as the stator core 30. Thus, the time required to start up the superconducting motor 10a is relatively short, the electric power consumption of each refrigerator 16 and 17 is relatively small.

in the superconducting motor 10a, the piston 54 of the first refrigerator 16 and the piston 54 of the second refrigerator 17 are arranged to move collinearly, and the respective coolant compressors 56 are driven such the respective pistons 34 move in opposite directions. Therefore, the rotational moments that are exerted on the superconducting motor 10a by the first refrigerators 16 and the second refrigerator 17, respectively, when the pistons 54 are moving can be offset, and thus vibrations and noises can be reduced.

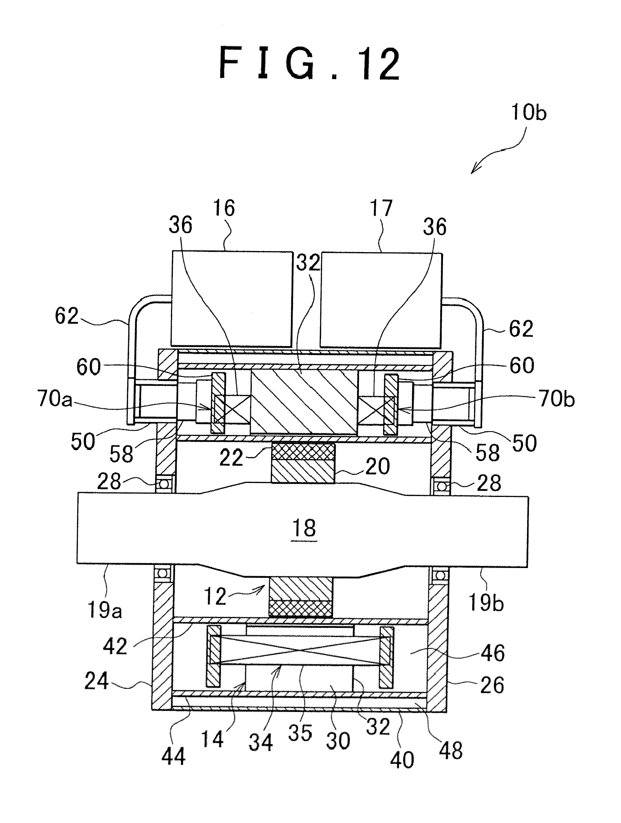

Next, a superconducting motor 10b of a third embodiment of the invention will be with reference to FIG. 12. The superconducting motor 10b of the third embodiment is different from the superconducting motor 10a of the second embodiment only in the arrangement of the refrigerators 16 and 17, and therefore, in the following, only the differences therebetween will be described and other structural elements of the superconducting motor 10b, that is, the structural elements of the superconducting motor 10b that are the same as those of the superconducting motor 10a will be denoted by the same reference numerals, and the descriptions on them will be omitted to avoid repetitions.

In the superconducting motor 10b, the coolant compressors 56 of the first refrigerator 16 and the second refrigerator 17 are attached on the outer peripheral wall of the motor case 40, and coolant pipes 62 extending from the respective coolant compressors 56 are connected to the respective cooling portions 58. In this case, too, the piston 54 in the first refrigerator 16 and the piston 54 in the second refrigerator 17 are driven so as to move in opposite directions. Other structures of the superconducting motor 10b are the same as those of the superconducting motor 10a.

With the superconducting motor 10b of the third embodiment, the same effects as those of the superconducting motor 10a of the second embodiment can be achieved, and further, the axial length of the superconducting motor 10b is shorter than that of the superconducting motor 10a, which increases the freedom in mounting the superconducting motor in a vehicle.

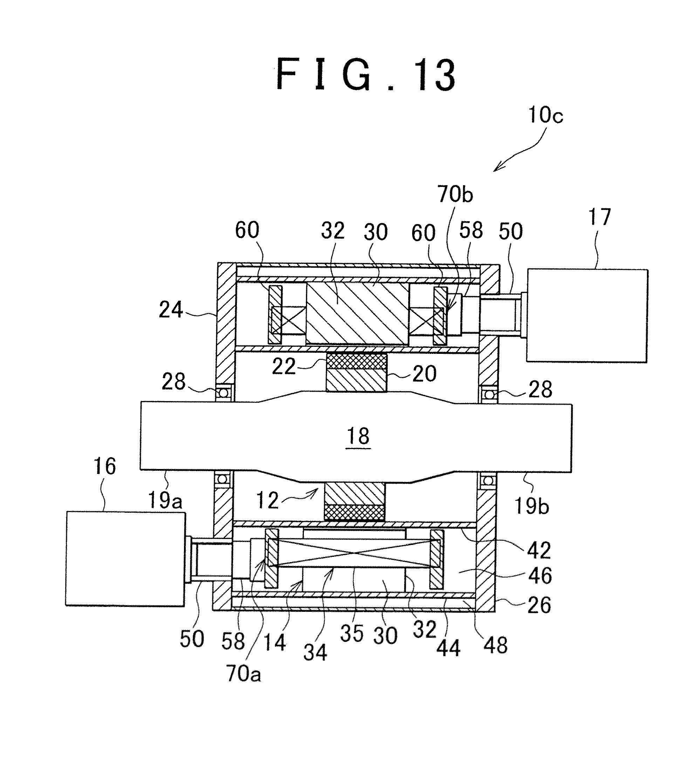

Next, a superconducting motor 10c of a fourth embodiment of the invention, will be described with to FIG. 13. The superconducting motor 10c of the fourth embodiment is different from the superconducting motor 10a of the second embodiment only in the of the first refrigerators 16 and the second refrigerator 17, and in the following, only the differences therebetween will be and other structural elements of the superconducting motor 10c, that is, the structural of the superconducting motor 10c that are the same as of the superconducting motor 10a will be denoted by the reference numerals, and the descriptions on them will be omitted to avoid repetitions.

In the superconducting motor 10c, the first refrigerator 16 and the second refrigerator 17 are arranged, respectively, at positions to each other in the radial direction of the stator 14, and the coolant compressors 56 are driven such that the pistons 54 move in the same direction. In this case, too, the piston 54 in the first refrigerator 16 and the piston 54 in the second refrigerator 17 reciprocate axially, although not collinearly unlike in the superconducting motor 10a described above. Other structures of the superconducting motor 10c are the same as those of the superconducting motor 10a.

More specifically, in the superconducting motor 10c, the first refrigerator 16 is arranged at a position that is 180 degrees away from the second refrigerator 17 in the circumferential direction and is opposed to the second refrigerator 17. In this case, the piston 54 in the second refrigerator 17 moves, on its expansion stroke, toward the right side of FIG. 13 when the piston 54 in the first refrigerator 16 moves, on its compression stroke, toward the right side of the FIG. 13, and on the other hand, the piston 54 in the second refrigerator 17 moves, on its compression stroke, toward the left side of FIG. 13 when the piston 54 in the first refrigerator 16 moves, on its expansion stroke, toward the left side of the FIG. 13. That is, the pistons 54 move in the same direction. Since the coolant compressors 56 of the first refrigerator 16 and the second refrigerator 17 are driven as described above, the rotational moments that are exerted on the superconducting motor 10c by the first refrigerator 16 and the second refrigerator 17, respectively, when the pistons 54 are moving can be offset or diminished, and thus vibration and noises can be reduced.

In the superconducting motor 10c, further, the first refrigerator 16 and the second refrigerator 17 are arranged, respectively, at the positions that are to each other, as described above. Therefore, the portions 58 the respective heat transfer 60 at positions that are radially to each other (i.e., positions that are 180 degrees from other in the circumferential direction), cool the neutral points 70a and 70b that are provided, respectively, at positions. As such, the time required to evenly cool the entire portions of the coils 34, which are circumferentially down to a desired ultralow temperature can be further reduced as compared to the superconducting motor 10a of the second embodiment.

Although the coils 34 formed of the respective superconducting wires are cooled from the both axial sides using the two refrigerators 16 and 17 in the superconducting motors 10a, 10b, and 10c of the example embodiments described above, the invention is not limited to this. That is, for example, the coils 34 may be cooled from the both axial sides using three or more refrigerators.

While the invention has been described with reference to example embodiments thereof, it is to be understood that the invention is not limited to the described embodiments or constructions. To the contrary, the invention is intended to cover various modifications and equivalent arrangements. In addition, while the various elements of the disclosed invention are shown in various example combinations and configurations, other combinations and configurations, including more, less or only a single element, are also within the scope of the appended claims.

## Claims

1. A superconducting motor (10; 10a; 10b; 10c) having: a rotor (12) that is rotatably supported, a stator (14) that is provided around the rotor (12), and that is provided with a plurality of coils (34) that are respectively formed of superconducting wires (74) and that are wound at an inner periphery of a stator core (30); and a refrigerator (16, 17) having a cooling portion (58) for cooling the plurality of coils (34),
the superconducting motor (10; 10a; 10b; 10c) **characterized in that** the cooling portion (58) of the refrigerator (16, 17) is in contact with the plurality of coils (34).

2. The superconducting motor (10; 10a; 10b; 10c) according to claim 1, wherein:
every predetermined number of coils out of the plurality of coils (34) are connected in series to form a plurality of phase coils (34U, 34V, 34W); and
the plurality of phase coils (34U, 34V, 34W) are in contact with the cooling portion (58) of the refrigerator (16, 17) at a neutral point (70; 70a, 70b) at which one end portions (74U, 74V, 74W) of the respective phase coils (34U, 34V, 34W) are electrically connected to each other.

3. The superconducting motor (10; 10a; 10b; 10c) according to claim 2, wherein at the neutral point (70; 70a, 70b), the one end portions (74U, 74V, 74W) of the respective phase coils (34U, 34V, 34W) are electrically connected to each other via the cooling portion (58) that is made of an electrically conductive member, rather than being directly connected to each other.

4. The superconducting motor (10; 10a; 10b; 10c) according to claim 2 or 3, wherein:
the neutral point (70; 70a, 70b) is provided at the side of coil end portions (36) of the plurality of coils (34), which are axial end portions of the plurality of coils (34) in an axial direction of the superconducting motor (10; 10a; 10b; 10c);and
the refrigerator (16, 17) is arranged such that the one end portions (74U, 74V, 74W) of the respective phase coils (34U, 34V, 34W) are connected to the cooling portion (58) of the refrigerator (16, 17) at the of the coil end portions (36) of the plurality of coils (34).

5. The superconducting motor (10; 10a; 10b; 10c) according to any one of claims 2 to 4, wherein the lengths of the superconducting wires (74) forming the respective coils (34) are equal to each other.

6. The superconducting motor (10; 10a; 10b; 10c) according to any one of claims 1 to 5, wherein:
the plurality of coils (34) are provided with an annular heat transfer member (60) that is in contact with coil end portions (36) of the plurality of coils (34), each of the coil end portions (36) being located at a superconducting motor axial direction end of a corresponding one of the plurality of coils (34); and
the cooling portion (58) of the refrigerator (16, 17) is arranged so as to be in contact with the plurality of coils, and cools the plurality of coils (34) from the coil end portions (36) via the heat transfer member (60).

7. The superconducting motor (10; 10a; 10b; 10c)according to any one of claims 1 to 6, wherein the superconducting motor (10; 10a; 10b; 10c) is a three-phase alternating current motor.

8. The superconducting motor (10; 10a; 10b; 10c) according to any one of claims 1 to 7, wherein:
the refrigerator (16, 17) has a cylinder (52) and a piston (54); and
the refrigerator (16, 17) is structured such that coolant in an expansion chamber defined in the cooling portion (58) is repeatedly compressed and expanded by the piston (54) reciprocating in the cylinder (52), while heat of the coolant is absorbed and radiated via a absorption member, causing a temperature decrease thereby achieving a desired cooling temperature at the cooling portion (58).

9. The superconducting motor (10; 10a; 10b; 10c) according to any one of claims 1 to 8, wherein:
the refrigerator (16, 17) has a coolant compressor (56) coupled with the cooling portion (58); and
the coolant compressor (56) is electrically insulated from a front end of the cooling portion (58), which is in contact with the plurality of coils (34), by an insulator that is provided at an intermediate portion of the cooling portion (58) or at a boundary between the cooling portion (58) and the coolant compressor (56).
